# EUROPEAN PATENT APPLICATION

(11) **EP 4 636 975 A1**
(43) Date of publication of application: **22.10.2025**
(21) Application number: 24170695.1
(22) Date of filing: 17.04.2024
(51) Int. Cl.: H02J 3/24, H02J 3/38, F03D 7/02, F03D 7/04

(54) **WIND TURBINE OSCILLATION DAMPING**

(71) Applicant: Siemens Gamesa Renewable Energy A/S, 7330 Brande (DK)
(72) Inventor: Ionita, Claudiu, 9530 Støvring (DK); Solberg, Brian, 2610 Rødovre (DK)
(74) Representative: SGRE-Association

(57) **Abstract**

A method of controlling the operation of one or more wind turbines (100) of a wind farm (300) is provided. An electrical power output of the wind farm (300) is provided to a power grid (200). Each of the one or more wind turbines (100) comprises a damping controller (120) configured to provide a damping action that counteracts structural oscillations by modulating the operation of a power generation system (102) of the wind turbine (100). Providing the damping action results in a power oscillation of a power output of the respective wind turbine (100). In the method, monitoring data (51) is obtained that is indicative of power oscillations. From the monitoring data, a rate of change of an amplitude of power oscillations in the power output of the one or more wind turbines (100) is estimated. Based on the estimated rate of change of the amplitude of the power oscillations, the damping controller (120) of at least one of said one or more wind turbines (100) is controlled to adjust the damping action of the damping controller (120).

## Description

### FIELD OF THE INVENTION

The present invention relates to a method of controlling the operation of one or more wind turbines of a wind farm, wherein each wind turbine operates a damping controller. It further relates to a respective control system and computer program.

### BACKGROUND

Environmental conditions, such as wind or waves, or changes in the rotor torque might result in tower vibrations. Oscillations occurring on the tower of a wind turbine are undesired, since they may reduce the lifetime of the tower due to accumulated fatigue stress. To reduce such structural oscillations, in particular tower oscillations in the side-side direction at tower resonant frequencies, the generator torque (respectively the power) may be modified to provide damping of such frequencies. The torque and thus the output power of the generator may for example be modulated so that the resulting structural oscillations caused by the generator are in counterphase to the structural oscillations caused by the environmental conditions. Accordingly, the damping functionality may result in the introduction of power oscillations in the power output of the wind turbine, which may be fed into an electrical power grid. In particular, if multiple wind turbines operating such damping function feed power into a grid, the resulting power oscillations on the grid may exceed limits imposed by grid operators, in e.g. by the respective grid codes, which are becoming more and more restrictive. A single turbine providing maximum damping power may even violate such grid code.

Power oscillations in the power output of the wind farm may be reduced by providing an energy storage device, which can provide smoothing of the power output. This however requires additional expenses and respective control of the energy storage device. Further, conventional means of reducing such power oscillations may not provide sufficient damping of these power oscillations, in particular in situations in which these change quickly. The document EP 3 207 246 B1 for example describes a conventional control system that provides damping of structural oscillations and reduces disturbances in the electrical grid.

It is desirable to further improve the quality of the electrical power provided to the power grid by a wind farm, and in particular to facilitate meeting the grid code applicable to the respective power grid. It is further desirable to achieve such improved power quality in a simple and efficient manner that does not require additional costly and bulky equipment.

### SUMMARY

Accordingly, there is a need to mitigate at least some of the drawbacks mentioned above. In particular, there is a need to provide an improved operation of one or more wind turbines of a wind farm that improves the quality of the output power fed into a power grid in an efficient manner.

This need is met by the features of the independent claims. The dependent claims describe embodiments of the invention.

According to an aspect of the invention, a method of controlling the operation of one or more wind turbines of a wind farm is provided. The electrical power output of the wind farm is provided to a power grid, wherein each of the one or more wind turbines comprises a damping controller configured to provide a damping action that counteracts structural oscillations by modulating the operation of a power generation system of the wind turbine. Providing the damping action results in a power oscillation of a power output of the respective wind turbine. The method comprises obtaining monitoring data that is indicative of power oscillations of a power output of the one or more wind turbines of the wind farm. It further comprises estimating, from the obtained monitoring data, a rate of change of an amplitude of power oscillation in the power output of the one or more wind turbines caused by operation of the damping controller of the one or more wind turbines of the wind farm. Based on the rate of change of the amplitude of the power oscillations, the damping controller of at least one of said one or more wind turbines is controlled to adjust the damping action of the damping controller.

Such method may allow reacting faster to increasing oscillation amplitudes in the power output of the wind farm and to take respective counter-measures by adjusting the damping action. In particular, by using the rate of change of the amplitude of the power oscillations at the power output, fast rises of the oscillation amplitude can be detected even if the absolute amplitude of the oscillations is still relatively low. Consequently, measures to reduce the oscillation amplitude may be taken sufficiently early so that the risk of exceeding limits for the power oscillation at the power output of the wind farm, which may be set by a respective grid code, may be reduced significantly. The control may further have more time to react and thus to avoid the exceeding of the power oscillation limit. On the other hand, this may allow setting a control limit in accordance with which the amplitude of the power oscillations at the power output is controlled to a value that is closer to the limit imposed by the grid code. As the safety margin of such control may be reduced, fewer reductions of the damping action of the damping controller may result, thus providing improved mitigation of structural oscillations and reduced mechanical stress. In general, the likelihood of fulfilling the grid requirements regarding power output oscillations of the wind farm may be increased.

The damping action may be adjusted to keep power oscillations in the power output of the wind farm within a predefined limit. Such limit may be set by an operator or by a grid code. Adjusting the damping action may comprise increasing and/or decreasing the damping action. This may occur in dependence on a phase of an output power oscillation of the respective wind turbine compared to a phase of oscillation of the power output of the wind farm. Increasing oscillations in counterphase to the output power of the wind farm may reduce the oscillations in the wind farm power output. It should be clear that any respective control may briefly overshoot any control limit, depending on the parametrization of the controller.

The damping controller may for example comprise a limiter function that limits the damping action, and the limiter function may be controlled based on the estimated rate of change. Such limiter function may increase and/or decrease a damping action to limit power oscillations at the power output of the wind farm.

In an embodiment, the method further comprises determining a rate error signal (RateDiff) from a difference between the estimated rate of change of the amplitude of power oscillations and a predetermined rate threshold, and adjusting the damping action based on the rate error signal. Such control may effectively limit the rate by which the power oscillation amplitude can change to the rate threshold. Additionally or alternatively, the estimated rate of change may directly be used as a rate error signal based on which the damping action is adjusted.

For example, based on the estimated rate of change (e.g., the rate error signal), a rate based control signal may be generated by a controller, such as a PI (proportional-integral) controller. The damping controller may be controlled to adjust the damping action based on the rate based control signal. An efficient control may thus be provided and implementation thereof may be facilitated.

The rate of change may be estimated for an amplitude of power oscillations within a predetermined frequency range. The frequency range may comprise or correspond to a frequency range of the modulation provided by the damping action. As an example, the power oscillations may be expected in a frequency range lower than 10Hz, lower than 5Hz, or lower than 2Hz. For example, the predetermined frequency range may be between 0.1 and 2Hz. Detection of power oscillations may thereby be facilitated and the precision of determining the rate of change may be improved.

The method may further comprise estimating an amplitude of the power oscillations in the electrical power output of the wind farm based on the monitoring data. The amplitude of the power oscillations may further be used in adjusting the damping action, which may further reduce the likelihood of exceeding any power oscillation limits. The estimated amplitude may then be employed for deriving the rate of change. Preferably, estimating the amplitude comprises filtering the monitoring data using a low-pass filter or a band-pass filter and/or using a spectral analysis.

Preferably, the amplitude is estimated in the predetermined frequency range. For example, in a power spectrum of the power output of the wind farm, the power oscillations may be present in a particular frequency range. The signal power in this frequency range may be used for estimating the amplitude of the power oscillations. Changes to the signal power in this frequency range may be used for estimating the rate of change. A simple and efficient way of estimating the rate of change may thus be provided. The estimated amplitude of the power oscillations may for example be provided in form of a power oscillation amplitude signal (PowerOscAmp) which may be employed in the control.

The estimated amplitude of power oscillations may for example be compared to an amplitude threshold and, based on the comparison, the damping controller may be controlled to adjust the damping action. By such control, the amplitude of the power oscillation in the wind farm power output may efficiently be kept below the amplitude threshold. The damping action may for example be reduced if the amplitude threshold is reached or exceeded.

In an exemplary implementation, the method further comprises generating an amplitude based control signal by a controller, such as a PI controller, based on a difference between the estimated amplitude of the power oscillations and an amplitude threshold. The damping controller may then be controlled based on the amplitude based control signal to adjust the damping action. The damping action may thus be adjusted both based on the amplitude of the power oscillations and the rate of change, which may further reduce the chance of exceeding any power oscillation limits imposed on the wind farm power output.

In an example, the rate based control signal and the amplitude based control signal may be merged, and the resulting merged control signal may be employed to adjust the damping action of the damping controller. The merging may comprise selecting, from the rate based control signal and the amplitude based control signal, the control signal that provides the larger control action, e.g. the larger adjustment of the damping action, as the merged control signal. By providing such merging, the two ways of adjusting the damping action may not interfere with each other and the risk of exceeding any limits on power oscillations of the wind farm power output may be reduced, in particular as the largest control action is selected.

In another embodiment, the method may further comprise merging a rate error signal determined from the rate of change of the amplitude of the power oscillations and an amplitude error signal determined from the estimated amplitude of the power oscillations to obtain a merged error signal, generating, by a controller, a merged control signal from the merged error signal, and controlling the damping controller based on the merged control signal to adjust the damping action of the damping controller. By such implementation, only one controller may be employed for providing both, the rate of change based control and the amplitude based control. The controller may be a PI controller (proportional-integral controller).

Merging of the rate error signal and the amplitude error signal may for example comprise: selecting the rate error signal as the merged error signal if the estimated rate of change exceeds a rate threshold and the estimated amplitude does not exceed an amplitude threshold; selecting a sum of the rate error signal and the amplitude error signal as the merged error signal if the estimated rate of change exceeds the rate threshold and the estimated amplitude exceeds the amplitude threshold; and selecting the amplitude error signal as the merged error signal if the estimated rate of change does not exceed the rate threshold and the estimated amplitude exceeds the amplitude threshold. By providing such merging of the error signals, it may be ensured that the error signals do not cancel out, e.g. if they have different signs, and that they do not result in contradictory control actions.

In a further embodiment, the method comprises predicting from the estimated rate of change and the estimated amplitude of the power oscillations if the amplitude of the power oscillations will exceed an amplitude threshold at a future point in time and in the affirmative, causing an adjustment of the damping action of the damping controller. A predictive control may thus be employed additionally or alternatively to the above-mentioned types of control, such as the PI control using one or two PI controllers. The prediction may for example be made for a predetermined time period. If it is predicted that the oscillation amplitude is likely to exceed the threshold within the time period, the adjustment of the damping action may be triggered. In any of these examples and embodiments, the controlling may comprise adjusting the damping action so as to reduce the amplitude of power oscillations at the power output of the wind farm, in particular if the rate of change indicates an increase of the amplitude of the power oscillation at a rate that indicates a risk of exceeding a predefined threshold of power oscillations in the power output of the wind farm. The risk to exceed such predefined threshold of power oscillations may thus be kept low.

It should be clear that there are various ways in which the damping action of the damping controller can be adjusted. An adjustment distribution unit may for example be provided that receives a control signal derived from the rate of change, such as the above-mentioned merged control signal, or a control signal obtained by the predictive control, and may distribute respective damping action adjustment commands to the one or more wind turbines the damping action of which is to be adjusted, or may transmit already adjusted modulation control signals to the one or more wind turbines the damping action of which is to be adjusted. Although it is preferred that the modulation signal that modulates the operation of the power generation system (such as a torque modulation that modulates a generator torque) is generated locally by the damping control of the wind turbine, it is also conceivable that a central controller generates the respective modulation control signal and provides it to the wind turbine damping controller which controls the power generation system accordingly.

The distribution may for example occur to one, two, or more wind turbines of the wind farm the damping action of which is to be adjusted. A coordinated adjustment of the damping action may limit the required reduction of the oscillation damping for some wind turbines and may even increase the damping action for other wind turbines. Overall, the limits of power oscillation of a wind farm power output may be kept while at the same time, a reduction of the damping action that counteracts the structural oscillations may be kept at a minimum.

For example, the damping action may be adjusted to keep power oscillations in the electrical power output of the wind farm below a predetermined threshold. To reduce the amplitude of the power oscillations in the electrical power output of the wind farm, the adjusting of the damping action may comprise reducing a damping action of a damping controller of one or more wind turbines the power output of which oscillates with a phase that contributes to the oscillation of the electrical power output of the wind farm (wind turbines with in phase power oscillation), and/or increasing a damping action of a damping controller of the one or more wind turbines the power output of which oscillates with a phase that counteract the oscillation of the electrical power output of the wind farm (counter-phase wind turbines), and/or stopping the damping action of a damping controller of one or more wind turbines the power output of which oscillates with a phase that contributes to the oscillation of the electrical power output of the wind farm. Reducing the damping action may be performed by reducing a modulation amplitude of the modulation of the power generator system, such as reducing an amplitude of the torque modulation of the generator. Similarly, the damping action may be increased by increasing a respective modulation amplitude.

Such way of adjusting the damping action may allow a control that keeps the reduction of the damping action to a minimum, in particular as it also allows counteracting the power oscillations by increasing the damping action of some wind turbines.

The method may comprise estimating a phase of the power oscillation of the power output of each of the wind turbines and of the wind farm. As the oscillation frequency may be rather low, the phase may easily be estimated and may be used to determine for which wind turbines the damping action is to be increased or decreased to reduce the power oscillations at the wind farm power output.

In an embodiment, estimating the rate of change and/or controlling the damping controller based on the rate of change may only be performed if an amplitude of the power oscillations of the power output of the wind farm estimated from the monitoring data exceeds a predetermined activation threshold. Such implementation may avoid unnecessary control actions in situations in which the amplitude of power oscillations of the wind farm power output is rather low, in particular below the activation threshold. This may make the control more efficient.

The monitoring data may be obtained by receiving, calculating and/or measuring. For example, obtaining the monitoring data may comprise receiving monitoring data for the electrical power output of the wind farm, receiving and summing the individual power output of the one or more wind turbines, and/or receiving and summing power modulation signals provided by the damping controllers of the one or more wind turbines for performing the damping action. There are accordingly several ways of how information on the power oscillations at the wind farm power output can be obtained, and any of these may be used. It is in particular not required to directly measure the wind farm power output, but the power oscillations can also be estimated from the respective power modulation signals of the damping controllers, or from the power output of the individual wind turbines.

The monitoring data may in particular indicative of power oscillations in the electrical power output of the wind farm, for example at a point of common coupling (PCC).

The rate of change may be estimated for the power oscillations at the power output of the wind farm, for example for a point of common coupling of the wind farm. Besides estimating the rate of change from the power oscillations of the wind farm power output, which may be measured or obtained as described above, the rate of change may also be determined individually for the individual wind turbines and may later be summed, for example under consideration of the respective phase of power oscillations.

The rate of change of the amplitude of the power oscillations may also be estimated from a magnitude of the power oscillations of the wind farm power output, from a power spectral density, or from any other (processed) signal that is indicative of the respective amplitude changes. It may only be important that the rate of change indicates how quickly the power oscillation amplitude of the wind farm output changes in order to enable a sufficiently fast adjustment of the damping action.

Similarly, estimating the amplitude of the power oscillations may likewise be performed based on a magnitude of the power oscillations in the wind farm power output, based on a spectral power or spectral density as mentioned above, or based on any other signal indicative of the power oscillation amplitude of the wind farm power output.

The adjustment distribution unit may form part of, e.g., a damping control system that includes the damping controllers for the wind turbines, and/or of a control system that implements the rate of change estimation and the respective control.

According to a further aspect of the invention, a control system for controlling the operation of one or more wind turbines of a wind farm is provided. An electrical power output of the wind farm is provided to a power grid, wherein each of the one or more wind turbines comprises a damping controller configured to provide a damping action that counteracts structural oscillations by modulating the operation of a power generation system of the wind turbine. Providing the damping action results in a power oscillation of a power output of the respective wind turbine. The control system is configured to perform any of the methods disclosed herein.

According to a further aspect of the invention, a wind farm comprising one or more respective wind turbines is provided. The wind farm further comprises a control system having any of the configurations described herein.

According to a further aspect of the invention, a computer program for controlling the operation of one or more wind turbines of a wind farm is provided. An electrical power output of the wind farm is provided to a power grid, wherein each of the one or more wind turbines comprises a damping controller configured to provide a damping action that counteracts structural oscillations by modulating the operation of a power generation system of the wind turbine. The computer program comprises control instructions which, when executed by a processing unit of a control system that controls the operation of the one or more wind turbines, cause the processing unit to perform any of the methods disclosed herein. Such computer program, in particular the respective control instructions, may be provided on a volatile or non-volatile storage medium or data carrier, and/or may be provided via a communication connection, such as a wired or wireless network connection.

By such control system, wind farm, or computer program, advantages may be achieved that correspond to the advantages outlined further above with respect to the method.

It is to be understood that the features mentioned above and those yet to be explained below can be used not only in the respective combinations indicated, but also in other combinations or in isolation, without leaving the scope of the present invention. In particular, the features of the different aspects and examples of the invention can be combined with each other unless noted to the contrary.

### BRIEF DESCRIPTION OF THE DRAWINGS

The forgoing and other features and advantages of the invention will become further apparent from the following detailed description read in conjunction with the accompanying drawings. In the drawings, like reference numerals refer to like elements.
Fig. 1 is a schematic drawing showing a wind farm comprising plural wind turbines and a control system according to an embodiment.
Fig. 2 is a schematic drawing showing an exemplary implementation of the control system of Fig. 1.
Fig. 3 is a schematic drawing showing an exemplary implementation of the control system of Fig. 1.
Fig. 4 is a diagram schematically illustrating power oscillations and power oscillation amplitude at a power output of a wind farm when a rate of change based control in accordance with embodiments of the invention is employed.
Fig. 5 is a flow diagram illustrating a method of controlling one or more wind turbines according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

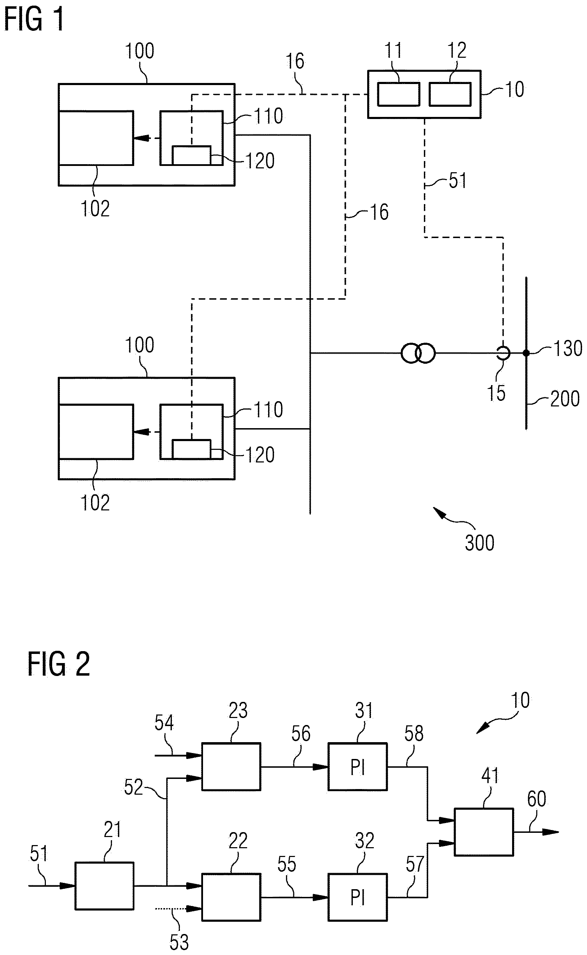

Fig. 1 schematically illustrates a wind farm 300 comprising plural wind turbines 100. Each wind turbine 100 may comprise a power generation system 102 that may include an electrical generator driven by a wind turbine rotor, a power converter, and associated components. Electrical power generated by power generation system 102 may be fed into a collector grid which may be coupled to the power grid 200, e.g. to a utility grid. Wind farm 300 may be coupled to power grid 200 at the point of common coupling (PCC) 130, at which the wind farm 300 feeds its generated output power into the power grid.

Each wind turbine 100 may comprise a wind turbine control system 110 that may include for example a wind turbine controller, a converter controller and the like. Such control system may control the output power of the wind turbine 100, for example by controlling the generator torque in accordance with power and torque set points, as known in the art. The wind turbine control system 110 further includes a damping controller 120 configured to modulate the operation of the power generation system 102 in such a way that the resulting forces and/or torques counteract structural oscillations of the wind turbine 100. Such structural oscillations may be tower oscillations, for example in a side-side direction, and/or drive train structural oscillations, or the like. Structural oscillations may be counteracted by modulating the torque of the generator of power generation system 102, and damping controller 120 may accordingly provide a respective torque set point modulation. A damping control signal having a respective signal component at one or more frequencies that are to be damped may for example be superimposed onto the torque set point so that generator torque is accordingly modulated. Generator torque may be controlled by controlling the currents in the generator using a power converter coupled to the electrical power output of the generator.

It will be apparent that such modulation of power generation system 102 results in an oscillation of the output power of wind turbines 100. The combined power oscillation will be experienced at the power output of a wind farm 300, in particular at PCC 130. Grid codes set strict limits for the power oscillations that can be fed into power grid 200. To stay within such power oscillation limit or amplitude reference, a control system 10 is provided that adjusts the damping action of the damping controllers 120 so that such limit or reference is met. Control system 10 may in particular employ for this purpose a control that is based on a rate of change of the amplitude of the power oscillations, and may optionally further employ a control that is based on the amplitude of the power oscillations. The control system 10 may for example limit the rate at which the power oscillation amplitude can change. This may provide sufficient time to react to such changes and to reduce the risk of exceeding any limit or reference for power oscillations set by the grid operator.

Wind turbine 100 may comprise plural damping controllers 120, for example a damping controller for tower oscillations, a damping controller for drive train damping, and further damping controllers that inject power oscillations into the output power of the wind turbine. The damping action of any of these controllers may be adjusted by the control system 10. Control system 10 may adjust the operation of one of these damping controllers, of a combination, or of each of these damping controllers. The wind farm 300 may certainly comprise more or fewer wind turbines 100.

To provide such adjustment of the damping action, the control system 10 obtains monitoring data that is indicative of power oscillations of the power output of the wind farm 300. It may for example measure the power output by a wind farm 300 using a measuring unit 15, for example a grid meter. In other examples, the power output of the individual wind turbines 100 may be summed to obtain the monitoring data. Also, it is possible to sum the contribution of the damping controllers 120, as these introduce the power oscillations in the power output of wind farm 300. Such sum will accordingly indicate the power oscillations in the wind farm power output. Control system 10 may receive the associated data or signals from the respective wind turbines, in particular their control systems 110, or may measure for example the output power of the wind turbines. Control system 10 may then provide a control signal 16 to one or more, preferably to each damping controller 120, to adjust the damping action. In other implementations, the adjustment may directly be included in a damping control signal that is provided towards the damping controllers, a modulation control signal may for example be adjusted to change the modulation amplitude.

Control system 10 may comprise a processing unit 11 and a memory 12. Processing unit 11 may comprise any kind of processor, such as a microprocessor, an application-specific integrated circuit, a field-programmable gate array, a digital signal processor and the like. Memory 12 may comprise any kind of memory, such as RAM, ROM, EEPROM, Flash Memory, a hard-disk drive and the like. Control system 10 may comprise further components common to a computer system, such as respective input/output interfaces, a data communication bus for interconnecting the different components, and a user interface. Memory 12 may store control instructions to be executed by processing unit 11. Such control instructions may be configured to cause the control system 10 to perform any of the methods described herein.

Fig. 2 illustrates an exemplary implementation of control system 10 of Fig. 1. Monitoring data 51 is received and comprises the information on the power oscillation and the wind farm power output, it may for example be a power signal measured by the output power measuring unit 15. Amplitude estimation unit 21 estimates the oscillation amplitude in the received monitoring data. It may be estimated in a desired frequency range, for which the unit 21 may employ any means of spectral analysis, it may for example use filters tuned to the desired frequency range. Tower oscillations and drive train oscillations may for example occur in a frequency range of about 0.1Hz to 2Hz, and the oscillation amplitude for this frequency range may be determined by unit 21. It generates a respective power oscillation amplitude signal 52 (PowerOscAmp) .

From signal 52, the unit 22 may estimate the rate of change of the amplitude of the power oscillations of the wind farm power output. It may for example determine how fast an averages oscillation amplitude changes using signal 52. The unit 22 may in particular generate a rate error signal 55, which may include the current rate of change of the amplitude signal 52, or for example a difference between the rate of change and a predetermined allowed rate of change, in particular a rate threshold 53. Such difference may be called "rate difference" (RateDiff). Unit 22 may thus be a rate error signal determination unit and may receive the rate threshold 53. The rate error signal 55 is provided to a controller 32, which may be a PI controller but may be implemented as any other suitable controller. Controller 33 may also be termed rate limiting controller as it is provided to ensure that the power oscillations do not change faster than a desired value. The rate controller 32 is tuned to generate a rate control signal 57 for adjusting the damping action of damping controllers 120 of the wind turbines 100. The rate control signal may for example demand a change of one or more of the wind turbine damping parameters. If the power oscillation amplitude increases too fast, the controller 32 may for example request a reduction of the damping power of the respective turbines.

Control system 10 may further include an amplitude error signal determination unit 23 that receives the amplitude signal 52. Unit 23 may determine amplitude error signal 56 based on a difference between the amplitude signal 52 and an amplitude threshold 54. The amplitude error signal 56 is provided to a controller 31, which may again be a PI controller or any other suitable controller. Based on the amplitude error signal 56, controller 31 generates an amplitude control signal 58 for adjusting the damping action of the damping controllers 120 of wind turbines 100. Again, actions may be taken based on the amplitude control signal such as a reduction of the damping action of the wind turbines.

Both controllers 31, 32 may operate to minimize the error signal and thus to keep the rate of change of the power oscillations below the rate threshold, and to keep the amplitude of the power oscillations below the amplitude threshold, respectively.

In order to avoid interference between the two control signals 57, 58, the control signal merging unit 41 is provided that receives both control signals. It merges both control signals and outputs a merged control signal 60 that is provided for adjusting the damping action of the damping controllers. Merging unit 41 may for example select the control signal of the two which provides the highest control action, for example the largest adjustment. In particular, if the control signals 57, 58 control a reduction of the damping action, the control signal providing the most severe reduction may be chosen. Other ways of merging both control signals 57, 58 may be used, such as summing or the like, but attention has to be paid that the control signals do not cancel out each other.

The rate control may not always be active. For example, if the amplitude signal 52 lies below an activation threshold, only the amplitude control by controller 31 may be performed while the rate control may be ceased. This may prevent unnecessary control actions when the power oscillation amplitude is rather far away from the limit or threshold set for the power output of wind farm 300.

Control system 10 may further comprise a distribution unit (not shown) which may distribute the merged control signal 60 to the damping controllers 120 of wind turbines 100. The distribution unit may provide a respective damping action adjustment signal 16 to each wind turbine, in particular to each damping controller thereof. Such distribution unit may in some embodiments equally distribute a reduction of the damping action to the damping controllers 120. In other implementations, such distribution unit may consider the phase of the power oscillations provided by each wind turbine. The power oscillations injected by the damping controllers 120 do not need to be in phase, and accordingly, there may be wind turbines generating a power oscillation that contributes to the power oscillation of the wind farm output power, while the oscillation present in the output power of other wind turbines may actually counteract the power oscillations in the wind farm output power (e.g., if they are counter-phase). Such distribution unit may accordingly obtain phase information from the output power oscillations of the individual wind turbines and may then determine an adjustment of the damping action for each wind turbine. It may be sufficient to increase the damping action of the wind turbines that counteract the oscillations of the wind farm output power, or the damping actions of some wind turbines may be reduced which are contributing to the oscillations in the wind farm output power. Combinations may of course also be used, such as increasing the damping action for some wind turbines and reducing the damping action for other wind turbines. Other adjustments of the damping action of the damping controllers is also conceivable, such as adjusting phase, frequency, or the like. In any case, in accordance with the merged control signal 60, the damping action of the damping controllers 120 is adjusted to minimize the respective error signal and thus to reduce a risk that the power oscillations at the wind farm power output exceed the applicable limit or reference.

By controlling the rate of change of the oscillation amplitude, the controller may have more time to react and may avoid the exceeding of the reference at the wind farm power output, which may for example occur in conventional systems if the oscillations increase very fast. In particular, in wind farms, the power oscillations of the individual wind turbines may be in phase and so the sum of power oscillations seen at the wind farm power output may be significant. Tower vibrations may for example develop very quickly, so that the tower damping controller may reach its maximum damping action already within one to two periods of the tower resonant frequency. By providing the rate control, the respective fast increase to high damping action may be slowed down, so that the power oscillations in the wind farm power output may only slowly increase and may be controlled to stay below the limit or reference. Control which is only based on the amplitude may on the other hand suffer from delays, e.g. from filters, algorithms to estimate the oscillation amplitude, data communication delays, and the like, so that during such fast increase, exceeding of an amplitude threshold 54 may only be detected when the power oscillations have already risen to a level above the limit or reference.

Further, using the rate control, the amplitude threshold 54 may be set closer to the limit or reference for power oscillations in the power output of the wind farm 300. The rate limitation may cause the power oscillations to only slowly approach such amplitude threshold 54 so that the controller 31 can efficiently prevent that the amplitude threshold is exceeded. The safety margin between this amplitude threshold 54 and the limit or reference for the wind farm power output oscillations may thus be reduced. Further, increasing such amplitude threshold 54 may have the benefit of resulting in fewer adjustments of the damping action of the damping controllers 120. By such control system, the risk that the limit or threshold of the wind farm output power oscillations is exceeded is further reduced.

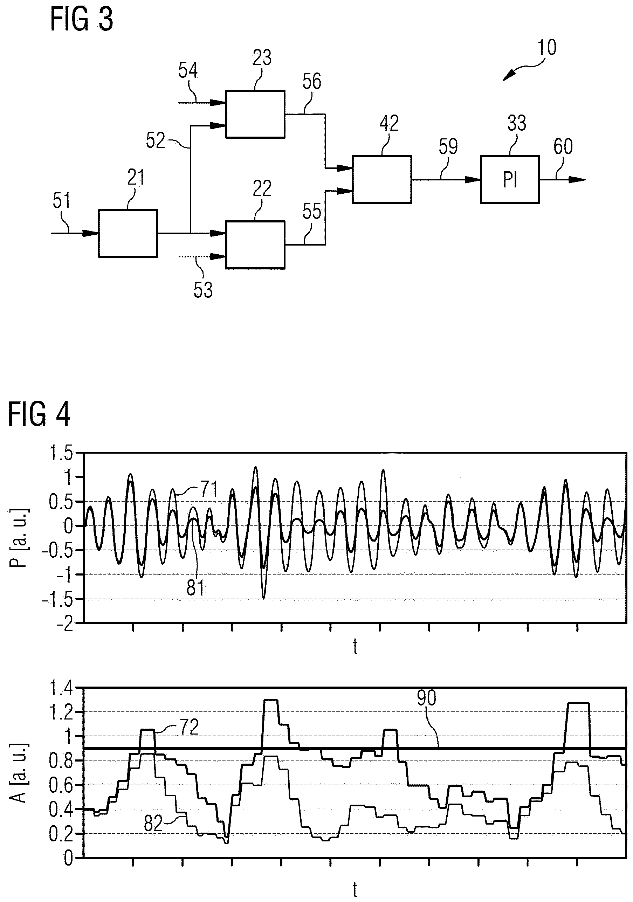

Fig. 3 is a modification of the control system 10 of Fig. 2, so that the above explanations are equally applicable. Instead of merging the amplitude and rate control signals 58, 57, the control system 10 of Fig. 3 merges the rate error signal 55 and the amplitude error signal 56 in an error signal merging unit 42. The resulting merged error signal 59 is then provided to a controller 33, which may be implemented similar to the controllers 31, 32 as a PI controller or any other suitable controller. Controller 33 outputs the merged control signal 60, in accordance with which the damping action of the damping controllers 120 is adjusted. Again, such merged control signal 60 may be distributed by a distribution unit (not shown) to the individual wind turbines, for example in form of the damping action adjustment signal 16.

This may have the advantage that only a single controller 33 needs to be employed. The merging unit 42 may ensure that the control actions are not contradictory or that they cancel each other. If the rate error signal 55 indicates that the rate of change exceeds the rate threshold 53, but the oscillation amplitude does not exceed the amplitude threshold 54, the rate error signal may be given out as the merged error signal 59. Vice versa, if the oscillation amplitude exceeds the amplitude threshold 54 and the rate of change does not exceed the rate threshold 53, the amplitude error signal 56 may be given out as the merged error signal 59. If both thresholds 53, 54 are exceeded, the sum of error signals 55, 56 may be given out as the merged error signal 59. Other ways of merging the error signals are certainly conceivable and may be employed with the control system 10. As mentioned above, rate error signal 55 does not need to be a difference between the rate of change and the rate threshold, but the rate of change may directly be used.

Besides the implementations of Figs. 2 and 3, other implementations of control system 10 are conceivable. For example, the rate of change and the power oscillation amplitude may together be used to predict if the oscillation amplitude will exceed a predetermined oscillation amplitude threshold within a given time frame. Such prediction may occur by a simple interpolation from a current amplitude value and the rate of change, or a more complex predictor may be employed. If it is predicted that the threshold will be exceeded, a respective control signal 60, and in particular one or more respective damping action adjustment signals 16, are generated to adjust the damping action of the damping controllers 120 so as to avoid that the threshold will be exceeded. This may occur in any of the above described ways. For example, if the oscillation amplitude increases too fast, the respective controller may request a reduction of the damping action of the damping controllers 120, and/or may request the increase of the damping action of wind turbine(s) the output power oscillations of which are in counterphase to the wind farm output power oscillations.

Fig. 4 exemplarily shows diagrams of the wind farm output power oscillations P (upper diagram), which may correspond to the monitoring data 51. The lower diagram of Fig. 4 illustrates the oscillation amplitude for the respective monitoring data, which may correspond to the power oscillation amplitude signal 52. The lower diagram of Fig. 4 further indicates a limit or reference 90 for the amplitude of power oscillations at the wind farm power output, which may be set by a power grid operator or a grid code. Curve 71 shows the output power oscillations of the wind farm when only the amplitude control is active to adjust the damping action. As can be seen in the oscillation amplitude curve 72 (lower diagram), although the oscillation amplitude is below the reference 90 during most of the time, the reference 90 is exceeded at some points.

Curve 81 shows the power oscillations in the power output of the wind farm 300 when the rate control is additionally active. It can be seen that the oscillation amplitude is reduced significantly in several time periods. In the lower amplitude diagram, the amplitude 82 of the power oscillations with active rate control shows that the oscillation amplitude is reduced significantly and stays below reference 90 during all times. From these figures, it can be seen that the control strategy that employs the rate limitation provides a significantly better performance of keeping the oscillation amplitude below the reference 90, especially in periods where the oscillations increase fast. Several benefits may thus be achieved by embodiments of the present invention.

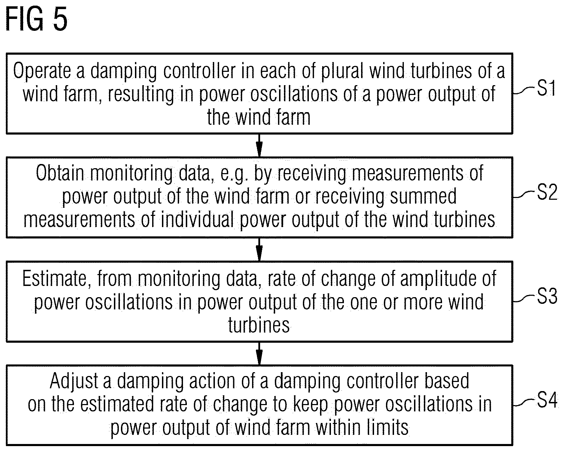

Fig. 5 is a flow diagram showing an embodiment of a method of control one or more wind turbine of a wind farm. The method may be performed by any implementation of control system 10. In step S1, the damping controller 120 of the wind turbines 100 is operated to damp structural oscillations, such as tower oscillations or drive train vibrations. In step S2, monitoring data is obtained that indicate the resulting power oscillations in the power output of the wind farm 300. The power output of the wind farm may for example be measured and a respective output power signal may be received by control system 10. From the monitoring data, the rate of change of the amplitude of the power oscillations in the power output of the wind farm is estimated (step S3). Based on the estimated rate of change, a damping action of one or more damping controller 120 is adjusted so as to keep the power oscillations in the power output of the wind farm 300 within limits, e.g. below the reference 90. For example a respective limiter function of the damping controller may be controlled to increase or decrease the damping action. By such method, the above-outlined advantages may be achieved.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of controlling the operation of one or more wind turbines (100) of a wind farm (300), wherein an electrical power output of the wind farm (300) is provided to a power grid (200), wherein each of the one or more wind turbines (100) comprises a damping controller (120) configured to provide a damping action that counteracts structural oscillations by modulating the operation of a power generation system (102) of the wind turbine (100), wherein providing the damping action results in a power oscillation of a power output of the respective wind turbine (100), wherein the method comprises:
- obtaining monitoring data (51) that is indicative of power oscillations of a power output of the one or more wind turbines (100) of the wind farm (300);
- estimating, from the obtained monitoring data, a rate of change of an amplitude of power oscillations in the power output of the one or more wind turbines (100) caused by operation of the damping controller (120) of the one or more wind turbines (100) of the wind farm (300); and
- controlling, based on the estimated rate of change of the amplitude of the power oscillations, the damping controller (120) of at least one of said one or more wind turbines (100) to adjust the damping action of the damping controller (120).

2. The method according to claim 1, further comprising determining a rate error signal (55) from a difference between the estimated rate of change of the amplitude of power oscillations and a predetermined rate threshold (53), and adjusting the damping action based on the rate error signal (55).

3. The method according to claim 1 or 2, further comprising generating a rate based control signal by a controller (32, 42), in particular a PI controller, based on the estimated rate of change and controlling the damping controller (120) based on the rate based control signal to adjust the damping action.

4. The method according to any of the preceding claims, wherein the rate of change is estimated for an amplitude of power oscillations within a predetermined frequency range, the frequency range comprising or corresponding to a frequency range of the modulation provided by the damping action.

5. The method according to any of the preceding claims, wherein the method further comprises estimating an amplitude (52) of the power oscillations in the electrical power output of the wind farm (300) based on the monitoring data (51), wherein estimating the amplitude preferably comprises filtering the monitoring data using a low pass or band pass filter and/or using spectral analysis.

6. The method according to claim 5, further comprising comparing the estimated amplitude (52) of power oscillations to an amplitude threshold (54) and controlling, based on the comparison, the damping controller (120) of the at least one wind turbine to adjust the damping action.

7. The method according to claim 5 or 6, further comprising generating an amplitude based control signal (58) by a controller (31, 42), in particular a PI controller, based on a difference between the estimated amplitude (54) of power oscillations and an amplitude threshold (54) and controlling the damping controller (120) based on the amplitude based control signal (58) to adjust the damping action.

8. The method according to claim 7 when directly or indirectly dependent on claim 5, further comprising merging the rate based control signal (57) and the amplitude based control signal (58) and employing a resulting merged control signal (60) to adjust the damping action of the damping controller.

9. The method according to claim 8, wherein the merging comprises selecting, from the rate based control signal (57) and the amplitude based control signal (58), the control signal that provides the larger adjustment of the damping action as the merged control signal (60).

10. The method according to any of claims 5-7, further comprising:
- merging a rate error signal (55) determined from the rate of change of the amplitude of the power oscillations and an amplitude error signal (56) determined from the estimated amplitude of the power oscillations to obtain a merged error signal (59);
- generating, by a controller (42), a merged control signal (60) from the merged error signal (59); and
- controlling the damping controller (120) based on the merged control signal (60) to adjust the damping action of the damping controller.

11. The method of according to claim 10, wherein the merging of the rate error signal and the amplitude error signal comprises:
- selecting the rate error signal (55) as the merged error signal (59) if the estimated rate of change exceeds a rate threshold (53) and the estimated amplitude does not exceed an amplitude threshold (54);
- selecting a sum of the rate error signal (55) and the amplitude error signal (56) as the merged error signal (59) if the estimated rate of change exceeds the rate threshold (53) and the estimated amplitude exceeds the amplitude threshold (54); and
- selecting the amplitude error signal (56) as the merged error signal (59) if the estimated rate of change does not exceed the rate threshold (53) and the estimated amplitude exceeds the amplitude threshold (54).

12. The method according to any of claims 5-11, further comprising predicting from the estimated rate of change and the estimated amplitude of the power oscillations if the amplitude of the power oscillations will exceed an amplitude threshold at a future point in time and in the affirmative causing an adjustment of the damping action of the damping controller.

13. The method according to any of the preceding claims, wherein the damping action is adjusted to keep power oscillations in the electrical power output of the wind farm below a predetermined threshold (90), wherein to reduce the amplitude of the power oscillations of the electrical power output of the wind farm (300), the adjusting of the damping action preferably comprises at least one of:
- reducing a damping action of a damping controller (120) of one or more wind turbines (100) the power output of which oscillates with a phase that contributes to the oscillation of the electrical power output of the wind farm (300);
- increasing a damping action of a damping controller (120) of one or more wind turbines (100) the power output of which oscillates with a phase that counteracts the oscillation of the electrical power output of the wind farm (300);
- stopping the damping action of a damping controller (120) of one or more wind turbines (100) the power output of which oscillates with a phase that contributes to the oscillation of the electrical power output of the wind farm (300).

14. A control system for controlling the operation of one or more wind turbines of a wind farm, wherein an electrical power output of the wind farm (300) is provided to a power grid (200), wherein each of the one or more wind turbines (100) comprises a damping controller (120) configured to provide a damping action that counteracts structural oscillations by modulating the operation of a power generation system (102) of the wind turbine (100), wherein providing the damping action results in a power oscillation of a power output of the respective wind turbine (100), wherein the control system (10) is configured to perform the method according to any one of the preceding claims.

15. A computer program for controlling the operation of one or more wind turbines (100) of a wind farm (300), wherein an electrical power output of the wind farm (300) is provided to a power grid, wherein each of the one or more wind turbines (100) comprises a damping controller (120) configured to provide a damping action that counteracts structural oscillations by modulating the operation of a power generation system (102) of the wind turbine (100), wherein the computer program comprises control instructions which, when executed by a processing unit (11) of a control system (10) that controls the operation of the one or more wind turbines (100), cause the processing unit (11) to perform the method of any of claims 1-13.
